# EUROPEAN PATENT APPLICATION

(11) **EP 0 540 078 A2**
(43) Date of publication of application: **05.05.1993**
(21) Application number: 92203115.8
(22) Date of filing: 09.10.1992
(51) Int. Cl.: G11B 23/113, G11B 23/023

(54) **Unit for associating sleeves with videocassette cases**

(30) Priority: 30.10.1991 IT RE910072
(71) Applicant: SACMA PLAST S.r.l., I-42100 Reggio Emilia (IT)
(72) Inventor: Sacchini, Enzo, I-42100 Reggio Emilia (IT)
(74) Representative: Corradini, Corrado

(57) **Abstract**

A unit for associating sleeves with videocassette cases consisting of two half-shells hinged together via a spine (21) and covered externally by an extended transparent sheet (20) welded along the opposing lateral edges of said two half-shells, comprises a support member (7, 77) for the sleeve (4), on which this latter rests via its opposing lateral edges and via its central strip which is parallel to these latter, and an overlying vertically slidable member (800) arranged to occupy a raised position in which it enables the sleeve substantially spread out on said support member to be loaded, and a lowered position in which it rests on those two sleeve portions located on one and the other side of said central strip in such a mariner as to flex these latter upwards, pusher means (8) being provided to withdraw the flexed sleeve from said two members and simultaneously insert it between the open case (2) and the respective transparent sheet (20), these latter being maintained temporarily spaced apart.

## Description

This invention relates generally to videocassette or videotape cases, and more particularly to a unit for associating respective personalized sleeves with said cases.

As is well known, said cases are of book formation and comprise two half-shells of substantially rigid synthetic material hinged together at a spine.

In addition, the outer surface of the case is covered by an extended transparent synthetic sheet welded to those edges of the half-shells which are opposing and parallel to the spine.

As said cases are mass-produced, the problem exists of automatically inserting the sleeves below said transparent sheet.

For said automatic insertion, the present applicant has already proposed the devices described in the two Italian patent applications Nos. 46847 A/89 and RE 91A 00035 respectively, to which reference should be made for further details.

Each of the devices of said documents basically comprises conveyor means driven with intermittent motion, on which the cases are laid open with their concavity facing upwards and with their spine positioned transversely to the direction of advancement of the cases, an overlying unit arranged to grip and position the cases when said conveyor means are stationary, and a horizontal insertion plate structure for the sleeves which is positioned to the side of said conveyor means and gripping unit.

With regard to the constructional details of the gripping and positioning units associated with the devices of said documents reference should be made to the respective texts. What should be noted is that each time the conveyor means halt to allow the sleeve to be inserted, said gripping unit arranges the two half-shells of the case at an opening angle greater than 180 degrees, while the corresponding transparent sheet is flexed in the opposite direction.

With regard to the sleeve insertion plate structure of the two aforesaid documents, in both cases it consists of two side-by-side coplanar plates driven with reciprocating towards and away from each other, and arranged on a slide which slides perpendicular to said movement and to the direction of advancement of the cases.

The said plates have the front portions of their respective outer longitudinal edges bent inwards through substantially 180 degrees to form two seats in which the opposing transverse edges of the sleeve are guided and slide.

Specifically, the two plates are arranged to occupy a rearward position in which they are spaced apart to receive a sleeve, after which they move together for insertion into the space between the case and the transparent sheet, then after insertion into said space they again widen out to position the sleeve in this space.

Further constructional details of said known devices will not be described as they do not concern the present description.

The use of the aforesaid known devices has underlined problems which derive mainly from the insertion of said plate structure between the case and the respective transparent sheet.

More specifically, when said plate structure is inserted between the sheet and the case and the respective plates are moved apart, it can happen and in fact has happened that said sheet suffers breakage and/or tearing, particularly at the lines along which it is welded to the case.

If this happens the production has necessarily to be halted to remove the damaged case, with consequent production loss, re-start problems and the possibility of damaging essential members of the device.

In addition, the need to insert the plate structure between the case and sheet means that this latter must have a width less than the distance between the welding lines of said sheet, to the detriment of appearance.

Finally, said sheet insertion plate structure has proved relatively complicated and hence particularly costly.

The main object of the present invention is to provide a unit for associating sleeves with respective cases which totally obviates the aforesaid problems.

In attaining said object, the idea on which the invention is based is to prearrange the sleeve in such a manner that it can be inserted by itself into the space between the case and transparent sheet, ie without the need to insert any other member or element into this space.

According to the invention, a construction suitable for the purpose comprises a support member for the sleeve, on which this latter rests via its opposing lateral edges and via its central strip which is parallel to these latter, and an overlying vertically slidable member arranged to occupy a raised position in which it enables the sleeve substantially spread out on said support member to be loaded, and a lowered position in which it rests on those two sleeve portions located on one and the other side of said central strip in such a manner as to flex these latter upwards, with simultaneous mutual approach of the opposing edges of the sleeve.

In this respect, when the sleeve is flexed as stated, its two opposing lateral edges are spaced apart by a distance less than the distance between the two lines along which the transparent sheet is welded to the respective case, this latter being maintained open as stated in the introduction, so that the subsequent insertion of the sleeve presents no problem.

For this, it is necessary merely to push the sleeve parallel to the generating lines of said flexed portions, with the result that it gradually withdraws from said two members to be gradually inserted into the space between the case and the transparent sheet, where it spreads out naturally once it loses contact with said two members.

The support member can consist for example of three mutually parallel side-by-side horizontal strips, of which the central one is preferably positioned at a higher level than that of the lateral strips, said vertically slidable member consisting for example of two coplanar side-by-side horizontal bars parallel to each other and to said strips. All the objects of the invention are attained by the aforesaid means.

In this respect, as only the sleeve is inserted between the case and the transparent sheet, any risk of tearing said sheet along the respective welding lines is eliminated, with simultaneous overcoming of the problems due to said tearing.

In addition, for the same reasons sleeves can be used having a width practically equal to the distance between the lines along which the transparent sheet is welded to the case.

The characteristics and constructional merits of the invention will be apparent from the detailed description given hereinafter with reference to the accompanying figures, which illustrate a particular preferred embodiment thereof by way of non-limiting example.

Figure 1 is a latero-rear perspective view of the invention with parts cut away.

Figure 2 is a side view to a greater scale, with parts cut away.

Figure 3 is a section on the line III-III of Figure 2 to a greater scale.

To prevent errors of interpretation and/or misunderstandings it should be noted that the unit of the invention is shown associated with a device of the type described in the documents cited in the introduction, but this must in no way be considered as limiting its application thereto, in that the invention is suitable for any device or apparatus able to position videocassette cases ready for receiving respective sleeves, as shown in the figure.

Said figures show a usual horizontal conveyor line indicated by 1 and shown schematically for the aforesaid reasons, it being driven with intermittent motion so as to position the cases 2 one after another in front of the unit of the invention.

To the sides of the line 1 there are two horizontal support and slide surfaces 3 for the cases, which advance open with their transparent sheet 20 facing downwards and their spine 21 positioned transverse to the the direction of advancement.

In front of said unit, said surfaces 3 comprise respective suckers 200 for gripping the sheet 20, and with which there correspond two overlying vertically mobile suckers 210 for gripping and raising the spine 21.

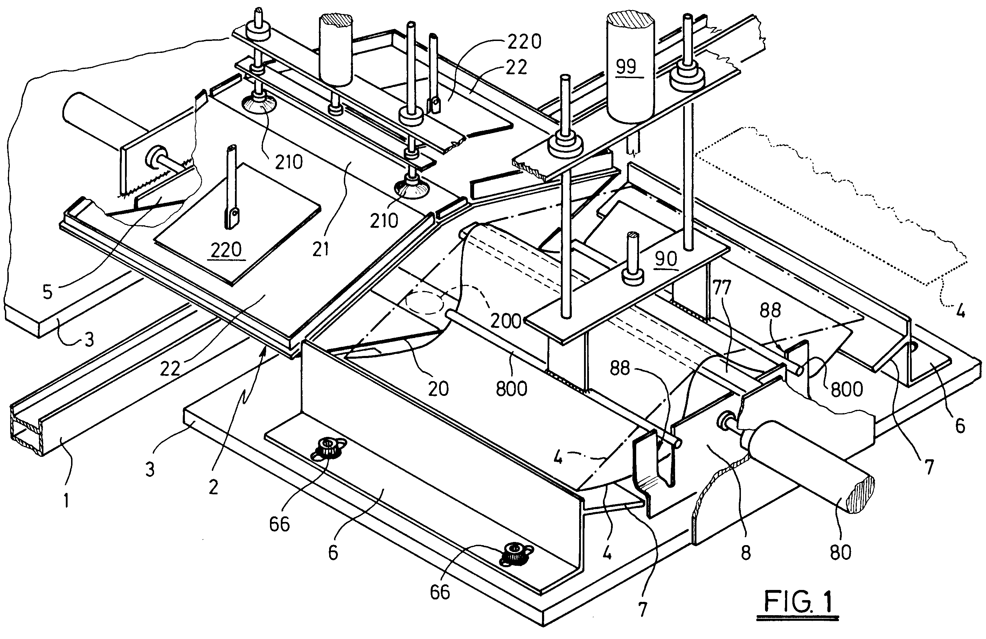

Two inclined plates 220 converging towards said two upper suckers 210 cooperate with these latter to maintain the two half-shells 22 of the case equally inclined when the spine 21 has been raised (Figure 1).

By this means the case 2 is opened by more than 180 degrees and the sheet 20 is flexed in the opposite direction, so that a space for the insertion of the sleeve 4 is defined between the case and sheet.

On the opposite surface 3 to that which supports the unit of the invention there is a slidable stop member 5 which halts the sleeve inserted into said space.

According to the invention, the loading unit of the invention comprises two coplanar horizontal supports 6 of right-angled cross-section which are parallel to each other and perpendicular to the conveying line 1.

The two supports 6 are provided with clamps 66 for adjusting their distance apart and each comprises, extending along its entire length, a downwardly inclined internal horizontal ledge 7 with its longitudinal edge free.

Between the upper longitudinal edge of each support 6 and the respective ledge 7 a seat of obtuse-angled right cross-section is formed for supporting and receiving the corresponding lateral edge of the sleeves 4.

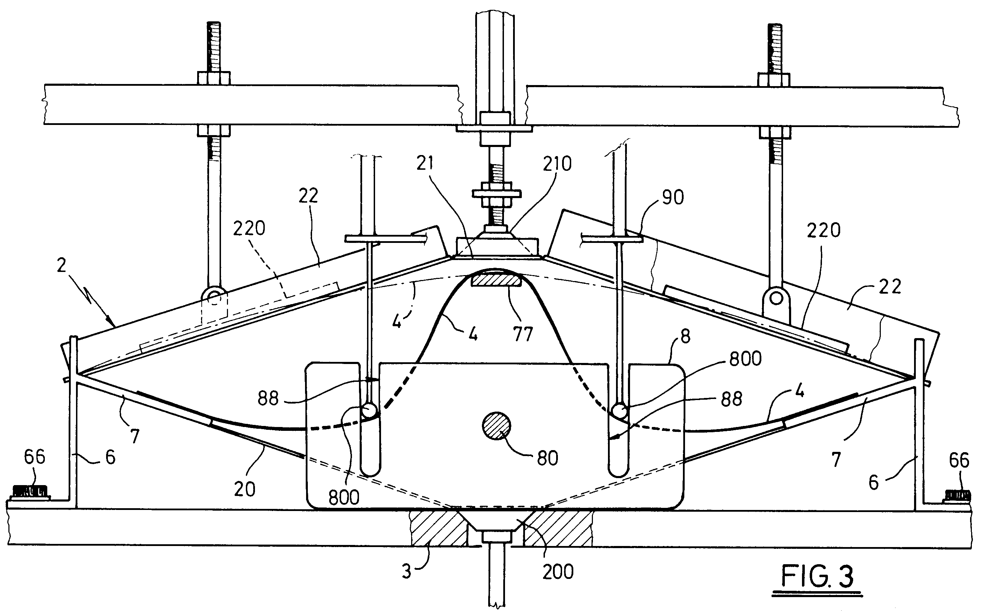

As can be best seen in Figure 3, the facing surfaces of the vertical edges of the two supports 6 are spaced apart (with the possibility of adjustment, as stated) by a distance practically equal to the distance between the lines along which the transparent sheet 20 is welded to the case 2, or in other words to the width of the sleeve 4 when completely extended.

As can be seen, a horizontal strip 77 is positioned centrally between said two ledges 7 and parallel to these latter, at a level higher than that of the two ledges but lower than that of the spine 21 when in its raised position.

The strip 77 is fixed to project rearwards over the surface 3, and below it in a position between the two ledges 7 there is a vertical transverse pusher plate 8 operated by a cylinder-piston unit 80. The plate 8 comprises two vertically extending opposing elongate recesses 88, externally to which the corresponding portions of the plate 8 are bent doubly forwards in the two opposing directions.

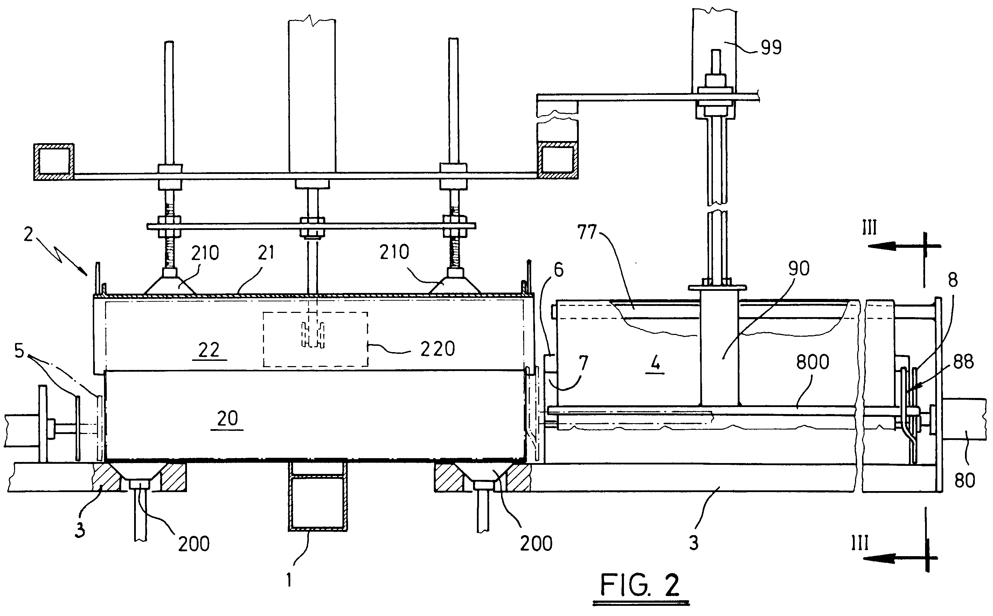

This is well illustrated in Figures 1 and 2, the purpose of said bends being to make contact, during its insertion, with the rear edge of the sleeve 4 at two points on said edge which straddle its centre line, so enabling the sleeve to be straightened should it be loaded not perfectly correctly.

Finally, on one side and the other of the strip 77 there are two overlying horizontal cylindrical bars 800, which are parallel to each other and to said strip and are vertically aligned with the underlying recesses 88 in the plate 8.

It should be noted that each bar 800 and the corresponding recess 88 lie in a common vertical plane lying between the vertical planes passing through the mutually facing edges of said strip 77 and the respective ledge 7. The reason for this will be apparent hereinafter.

Finally, said pair of bars 800 is supported by a fork-shaped frame 90 which is made to slide vertically by a respective cylinder-piston unit 99. It should also be noted that the length of said strips 77, ledges 7 and bars 800 is of the same order of magnitude as the length of the sleeve 4 (Figure 2).

The described loading unit operates as follows. Before a case 2 halts and is positioned as heretofore described (see Figures 1, 3), the bars 800 are in their raised position whereas the plate 8 and stop member 5 are in their retracted position.

A suitable loading device (not shown because of usual type) transfers a sleeve 4 from a respective storage region, such as that indicated for example by dotted lines to the right of Figure 1, onto the strip 77 of the unit and consequently onto the ledges 7.

Said position is shown by dashed and dotted lines in Figures 1 and 3, from which it can be seen that the sleeve 4 is flexed centrally in the same manner as the two half-shells 22 of the case 2.

In this configuration the two lateral edges of the sleeve are spaced apart by a distance substantially equal to the horizontal distance between the lines along which the transparent sheet 20 is welded to the open case 2.

As soon as the sleeve 4 has been fed onto the unit, the bars 800 receive the enabling signal to descend as shown by full lines in all the accompanying figures.

With this, the two sleeve portions lying on one and the other side of the strip 77 assume a curvature which is the opposite of that determined by said strip 77, so that the two lateral edges of the sleeve 4 move towards each other to a (horizontal) distance apart which is less than that between the lines along which the sheet 20 is welded to the open case 2.

More specifically, the sleeve assumes an omega-shaped configuration.

As can be seen in Figure 3, it should be noted that the path of downward travel of the bars 800 is such as to maintain the vertical extension of the transverse outline of the doubly flexed sleeve within the outline of the mouth of the space formed between the case 2 and sheet 20.

At this point, after advancing the stop member 5 to just behind the edge of the transparent sheet 20 (position shown by dashed and dotted lines in Figure 2), the cylinder-piston unit 80 receives the enabling signal to advance the plate 8, with simultaneous insertion of the sleeve between the case 2 and the transparent sheet 20.

Because of its intrinsic elasticity and/or flexibility characteristics, the sleeve 4 spreads out on abandoning the bars 800, after which the entire assembly is repositioned as previously, for loading a further sleeve and for awaiting the arrival of the next case.

The merits and advantages of the invention are clearly apparent from the aforegoing and from an examination of the accompanying figures.

The invention is not limited to the single embodiment illustrated and described, but covers all technical equivalents of the aforesaid means and their combinations, if implemented within the context of the following claims.

Thus for example, a channel-shaped body can be provided instead of the two bars 800.

## Claims

1. A unit for associating sleeves with videocassette cases consisting of two half-shells (22) hinged together via a spine (21) and covered externally by an extended transparent sheet (20) welded along the opposing lateral edges of said two half-shells, of the type to be associated with a device for positioning the case (2) open through more than 180 degrees with the transparent sheet (20) flexed in the opposite direction, characterised by comprising a support member (7, 77) for the sleeve (4), on which this latter rests via its opposing lateral edges and via its central strip which is parallel to these latter, and an overlying vertically slidable member (800) arranged to occupy a raised position in which it enables the sleeve substantially spread out on said support member to be loaded, and a lowered position in which it rests on those two sleeve portions located on one and the other side of said central strip in such a manner as to flex these latter upwards, pusher means (8) being provided to withdraw the flexed sleeve from said two members and simultaneously insert it between the open case (2) and the respective transparent sheet.

2. A unit as claimed in claim 1, characterised in that said support member (7, 77) comprises three side-by-side horizontal elongate elements which are parallel to each other and equidistant, and of which the two external elements (7), in the form of ledges, lie in a common horizontal plane, whereas the central element (77), in the form of a strip, is situated at a higher level than said common horizontal plane.

3. A unit as claimed in the preceding claims, characterised in that said two ledges (7) are inclined downwards towards the central strip (77), and are positioned on respective supports (6) of adjustable distance apart, which extend to a higher level than the outer longitudinal edges of the corresponding ledges (7).

4. A unit as claimed in the preceding claims, characterised in that said vertically slidable member (800) comprises two side-by-side bars lying in a horizontal plane, they being parallel to each other and to the elements (7, 77) of said support member, and being positioned straddling said strip (77).

5. A unit as claimed in the preceding claims, characterised in that said pusher means (8) consist of a flat body positioned transversely to said ledges, strip and bars, and made to slide parallel to these latter with to-and-fro movement, said flat body being positioned between the two ledges (7) below the strip (77) and being provided upperly with recesses (88) for receiving the bars when these latter are in their lowered position, with said means (8) there being associated an opposing stop member (5) for limiting the insertion of the sleeve (4).
